# EUROPEAN PATENT SPECIFICATION

(11) **EP 1 160 778 B1**
(45) Date of publication and mention of the grant of the patent: **22.03.2006**
(21) Application number: 01304409.4
(22) Date of filing: 18.05.2001
(51) Int. Cl.: G11B 7/125, G11B 7/135

(54) **Optical pickup apparatus and optical pickup method**
Optische Abtastvorrichtung und optisches Abtastverfahren
Dispositif de lecture optique et procédé de lecture optique

(30) Priority: 26.05.2000 JP 2000156986
(43) Date of publication of application: 05.12.2001
(73) Proprietor: Ricoh Company, Ltd., Tokyo 143-8555 (JP)
(72) Inventor: Ohuchida, Shigeru, Tokyo (JP)
(74) Representative: Lamb, Martin John Carstairs

(56) References cited:
- JP-A- 9 063 111
- JP-A- 10 319 318
- JP-A- 11 039 701
- US-A- 5 191 204
- US-A- 5 247 167
- US-A- 5 500 846

## Description

The present invention relates to an optical pickup apparatus which records/reproduces data on different kinds of optical recording media by using selectively laser lights of different wavelengths.

In a pickup apparatus, a laser light from a laser diode is incident onto a signal recording surface of an optical recording medium by way of for example a hologram device, and a reflection light from the signal recording surface is detected by a photodetection device by way of the hologram device, and thereby recording/reproducing is performed onto the optical recording medium such as DVD or CD. In this case, it is necessary to control so that the laser light can be an optimum level by monitoring an output level of the laser light in order to record/reproduce stably.

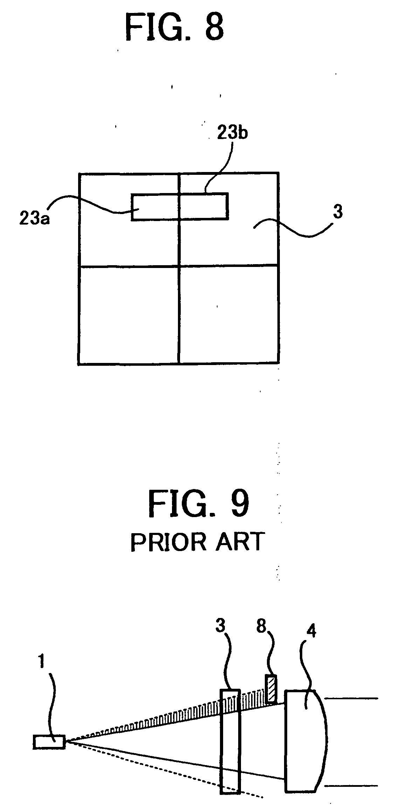

Therefore, conventionally, as illustrated in Figure 9, a photodetection device for monitor 8 is arranged on an optical path in an optical pickup apparatus, and an output level of a laser light emitted from a laser diode 1 is detected by a photodetection device for monitor 8 and the control is performed on the basis of a detected value so that the laser light can be an optimum level. Numeral 3 is a hologram device and numeral 4 is a collimator lens.

However, in this method, the photodetection device for monitor 8 other than a photodetection device for signal needs to be arranged, and the work such that the photodetection device for monitor 8 is arranged in a limited space is complicated and there is a problem in that a detection amount of the photodetection device for monitor 8 changes greatly by a gap of the arranged position.

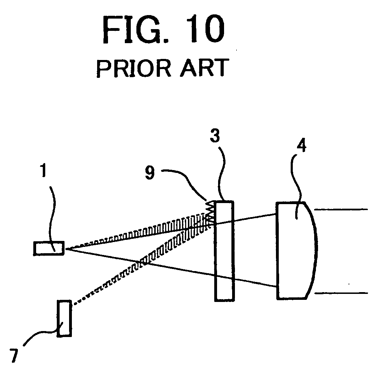

In order to solve this problem, as illustrated in Figure 10, a method for detecting the level of the laser light from the laser diode 1 is adopted such that a reflection hologram 9 is formed on the hologram device 3, and the laser light from the laser diode 1 is reflected and diffracted by the reflection hologram 9 and is detected by a photodetection device 7. In this method, the photodetection device for signal and the photodetection device for monitor can be formed on one plate, and the number of devices is reduced and further the photodetection device is simply adjusted.

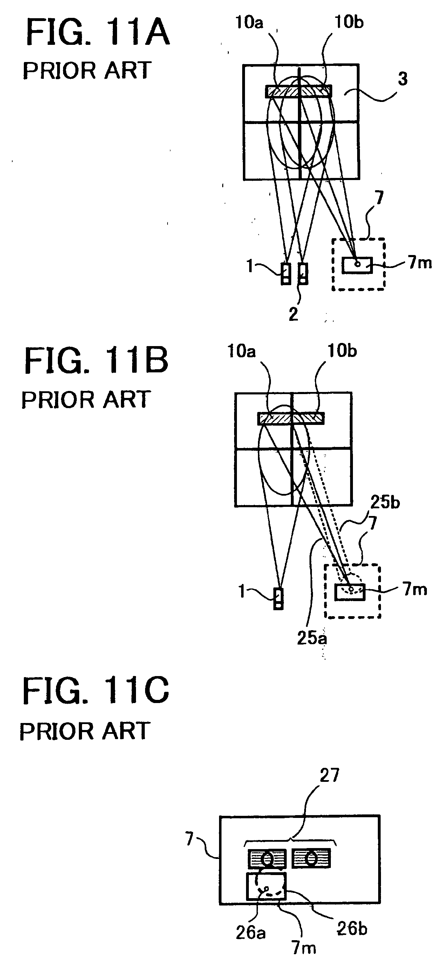

In this case, when the laser lights of different wavelengths (635 nm or 650 nm, and 780 nm) from the laser diode 1 and a laser diode 2 are used, the laser light of 635 nm or 650 nm from the laser diode 1 and the laser light of 780 nm from the laser diode 2 pass the hologram device 3 as illustrated in Figure 11A, and a reflecting type diffraction element 10a which reflects the laser light of 635 nm or 650 nm and a reflecting type diffraction element 10b which reflects the laser light of 780 nm are formed.

The each of the reflection light from the reflecting type diffraction element 10a and the reflection light from the reflecting type diffraction element 10b is guided to and detected on a photodetection element for monitor 7m formed in the photodetection device 7, and the output levels of the laser lights from the laser diodes 1 and 2 can be monitored respectively.

When the output levels of laser lights of the different wavelengths described above are monitored, if interval between the laser diodes 1 and 2 are apart each other, the laser light emitted from a collimator lens 4 proceeds in a slant direction, and is incident to an objective lens slantingly, and thus aberration occurs in a spot formed on the optical recording medium

Therefore, the interval between the laser diodes 1 and 2 can be not so apart, and the overlapped portion each other in the emitted patterns from the laser diodes 1 and 2 on the surface of the hologram device 3 occurs as illustrated in Figure 11A. Thus, for example, when the laser light 1 is illuminated, the laser light of 635 nm or 650 nm is emitted, however, the laser light is incident not only onto the reflecting type diffraction element 10a but also the reflecting type diffraction element 10b as illustrated in Figure 11B. Numeral 25a is a diffraction light from the diffraction element 10a and numeral 25b is a diffraction light from the diffraction element 10b.

In this case, as illustrated in Figure 11C, the reflection light from the reflecting type diffraction device 10a forms a small spot 26a and focuses, and the output level of the laser light from the laser diode 1 can be detected. On the other hand, the reflection light from the reflecting type diffraction element 10b becomes a large spot 26b before focusing on the photodetection device 7, and is incident onto a photodetection element 27 other than the photodetection element for monitor 7m and thereby a flare light occurs. As a result, it is feared that the detection accuracy of the output level of the laser light from the laser diode 1 is decreased.

An optical pickup apparatus according to the preamble of claims 1, 7, and 9 is disclosed in JP 11039701 A.

Accordingly, the present invention aims to provide an optical pickup apparatus in which the number of devices is decreased and complicated adjustment is not necessary, and further output levels of laser lights of plural wavelengths can be accurately monitored by suppressing the occurrence of a flare light. According to a preferred embodiment of the present invention, there is provided an optical pickup apparatus according to claim 1.

Preferably, said laser emitting means are laser diodes; said photodetection means is a photodetection device; and said diffraction means is a diffraction type optical device.

Preferably, each of the plurality of reflecting type diffraction elements is arranged at a position such that only the laser light of the corresponding wavelength is diffracted.

Preferably, each of the plurality of reflecting type diffraction elements heighten the diffraction efficiency of the laser light of the corresponding wavelength.

Preferably, each of the plurality of reflecting type diffraction elements diffract only the laser light of the corresponding wavelength due to a coating on each of the plurality of reflecting type diffraction elements.

Preferably, the plurality of reflecting type diffraction elements are formed on a surface of a side of the optical recording medium in the diffraction type optical device, and coating is performed so as to transmit only the laser light of the corresponding wavelength, on a surface of a side of the laser diodes in the diffraction type optical device.

According to another preferred embodiment of the present invention, there is provided an optical pickup apparatus according to claim 7.

According to another preferred embodiment of the present invention, there is provided an optical pickup apparatus according to claim 9.

Preferably, each of the plurality of reflecting type diffraction elements suppresses reflection of laser light, other than laser light of the corresponding wavelength, to the photodetection device.

Preferably, the polarization diffraction device is made from an organic group macromolecule film.

According to another preferred embodiment of the present invention, there is provided an optical pickup method for reading/reproducing data on an optical recording medium according to claim 13.

According to another preferred embodiment of the present invention, there is provided an optical pickup method for reading/reproducing data on an optical recording medium according to claim 14.

According to another preferred embodiment of the present invention, there is provided an optical pickup method for reading/reproducing data on an optical recording medium according to claim 15.

A more complete appreciation of the present invention and many of the attendant advantages thereof will be readily obtained as the same becomes better understood by reference to the following detailed description, particularly when considered in considered in connection with the accompanying drawings, wherein:
Figure 1 is an explanation view illustrating whole structure of a first embodiment of the present invention;
Figures 2A to 2B are explanation views relationship between an emitted laser light pattern and a reflecting type diffraction element of the first embodiment of the present invention;
Figure 3 is an explanation view illustrating a main part of a second embodiment of the present invention;
Figures 4A to 4B are explanation views illustrating a main part of a third embodiment of the present invention;
Figures 5A to 5B are explanation views illustrating a main part of a forth embodiment of the present invention;
Figures 6A to 6C are explanation views illustrating a main part of a fifth embodiment of the present invention;
Figures 7A to 7C explanation views illustrating a main part of a sixth embodiment of the present invention;
Figure 8 is an explanation view illustrating a main part of a seventh embodiment of the present invention;
Figure 9 is an explanation view illustrating monitor of a laser light in an optical pickup apparatus of one prior art;
Figure 10 is an explanation view illustrating monitor of a laser light in an optical pickup apparatus of another prior art; and
Figures 11A to 11C are explanation views illustrating photodetection of a monitor laser light in the optical pickup apparatus in Figure 10.

Referring now to the drawings, wherein like reference numerals designate identical or corresponding parts throughout the several views, preferred embodiments of the present invention are described.

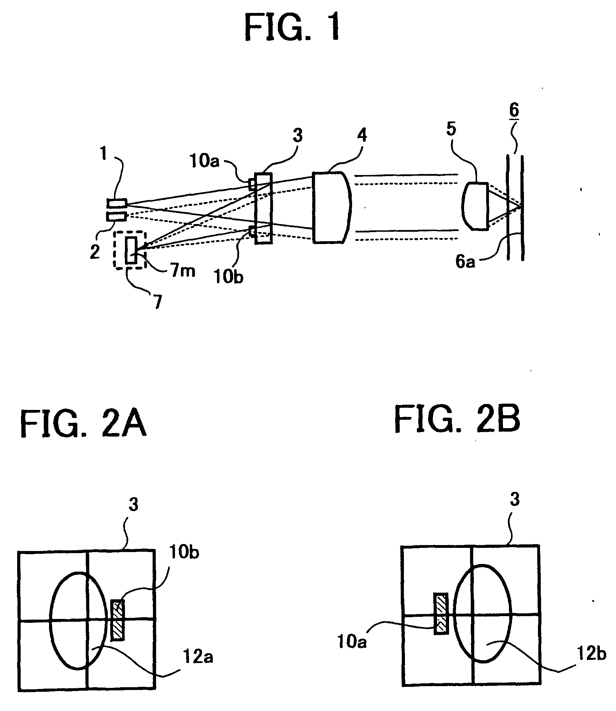

Referring to Figures 1 - 2, a first embodiment of the present invention will be described.

Figure 1 is a view illustrating the whole structure of this embodiment, and Figures 2A to 2B are views illustrating relationship between an emitted laser pattern and a reflecting type diffraction element of this embodiment.

In this embodiment, as illustrated in Figure 1, a laser diode 1 emitting a laser light of wavelength 635 nm or 650 nm and a laser diode 2 emitting a laser light of wavelength 780 nm are arranged, and a laser light emitted from the laser diode 1 or 2 is transmitted through a hologram device 3 of a diffraction type optical device arranged on a latter path of the laser diodes 1 and 2, and is incident to a collimator lens 4 arranged on a latter path of the hologram device 3. The laser light from the laser diode 1 or 2 is converted to a parallel light by the collimator lens 4, and is focused by an objective lens 5, and is incident to a signal recording surface 6a of an optical recording medium 6 as being focused. When operation of recording, data is recorded onto the signal recording surface 6a of the optical recording medium 6 as being in this state.

Further, a reflected laser light of wavelength 635 nm or 650 nm or a reflected laser light of wavelength 780 nm which is reflected from the signal recording surface 6a is transmitted through the objective lens 5 and is converted to a parallel light. The laser light passes through the collimator lens 4, is incident to the hologram device 3 as being focused, and is incident onto a photodetection device 7 as being diffracted by the hologram device 3. Thereby, recorded data of the signal recording surface 6a is detected and reproducing operation is performed.

In this embodiment, as illustrated in Figure 1, a reflecting type diffraction element 10a which reflects the laser light of wavelength 635 nm or 650 nm and a reflecting type diffraction element 10b which reflects the laser light of wavelength 780 nm are formed and arranged on a side of the laser diodes 1 and 2 in the hologram device 3. With respect to positions of the reflecting type diffraction elements 10a and 10b arranged on the surface of the hologram device 3, the reflecting type diffraction element 10b is arranged at a position to which an emitted pattern 12a of the laser light of wavelength 635 nm or 650 nm from the laser diode 1 is not irradiated as illustrated in Figure 2(a), and the reflecting type diffraction element 10a is arranged at a position to which an emitted pattern 12b of the laser light of wavelength 780 nm from the laser diode 2 is not irradiated as illustrated in Figure 2B.

In this embodiment of such a structure, when the output level of the laser light of wavelength 635 nm or 650 nm is monitored, the emitted pattern 12a from the laser light 1 is irradiated only onto the reflecting type diffraction element 10a and is not irradiated onto the reflecting type diffraction element 10b. Thus, only the laser light of wavelength 635 nm or 650 nm reflected from the reflecting type diffraction element 10a is irradiated onto the photodetection element for monitor 7m of the photodetection device 7 as being a focused small spot, and the incident light is not irradiated onto a photodetection element for signal other than the photodetection element for monitor 7m in the photodetection device 7, and therefore occurrence of a flare is greatly suppressed.

In a same manner as described above, when the output level of the laser light of wavelength 780 nm emitted from the laser diode 2 is monitored, the emitted pattern 12b from the laser light 2 is irradiated onto only the reflecting type diffraction element 10b and is not irradiated onto the reflecting type diffraction element 10a. Therefore, only the laser light of wavelength 780 nm reflected from the reflecting type diffraction element 10b is incident onto the photodetection element for monitor 7m of the photodetection device 7 as being a focused small spot, and the incident light is not incident onto the photodetection element for signal other than the photodetection element for monitor 7m of the photodetection device 7, and therefore the occurrence of the flare is greatly suppressed. As described above, a suppression setting device is realized.

For this reason, according to this embodiment, the photodetection element for monitor 7m is integrated with the photodetection device 7, and thereby it is possible to decrease the number of devices and to simplify the structure and the adjusting work. At the same time, the reflecting type diffraction element 10b is arranged at the position on the surface of the hologram device 3 onto which the emitted pattern of the laser light of wavelength 635 nm or 650 nm from the laser diode 1 is not irradiated, and the reflecting type diffraction element 10a is arranged at the position on the surface thereof onto which the emitted pattern of the laser light of wavelength 780 nm is not irradiated. Thereby, the flare is suppressed and the output level of the laser light from the laser diode 1 or 2 is high accurately detected, and therefore recording/reproducing operation with respect to the optical recording medium 6 can be performed at high quality.

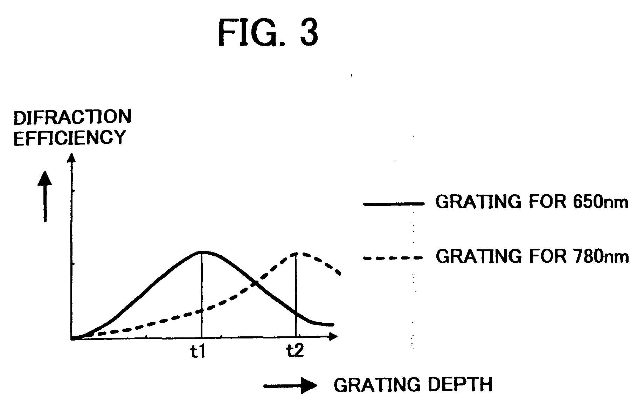

Referring to Figure 3, a second embodiment will be described. Figure 3 is a view illustrating a main part of this embodiment of the present invention.

In the first embodiment described above, the reflecting type diffraction element 10b is arranged at the position onto which the emitted pattern 12a of the laser light of wavelength 635 nm or 650 nm from the laser diode 1 is not irradiated, and the reflecting type diffraction element 10a is arranged at the position onto which the emitted pattern 12b of the laser light of wavelength 780 nm from the laser diode 2 is not irradiated. In this case, a space where the reflecting type diffraction elements can be arranged is narrow.

Thus, there is a case in that intensity of monitor detection on the photodetection element for monitor 7m is not obtained enough.

In order to solve the problem, in this embodiment, grating depths of the reflecting type diffraction elements 10a and 10b are selected respectively, and diffraction efficiency of the laser light with respect to a corresponding wavelength thereof is heighten. Thereby, the laser light of wavelength other than the corresponding wavelength allows somewhat to be incident onto the corresponding reflecting type diffraction element, and the reflecting type diffraction elements 10a and 10b are arranged respectively at positions where incident amounts of the laser lights of the corresponding wavelengths can be obtained enough. The structures of the other parts in this embodiment are the same as those in the first embodiment, and therefore the repeated description will be omitted.

Generally, as illustrated in Figure 3, a gentle mountain type characteristic in which grating depth of maximum diffraction efficiency corresponding to the each wavelength is a center is recognized, between the grating depth and the diffraction efficiency. A characteristic curve illustrated by a solid line in Figure 3 shows relationship between the grating depth and the diffraction efficiency of the reflecting type diffraction element 10a on which the laser light of wavelength 650 nm is reflected, and a characteristic curve illustrated by a dashed line shows relationship between the grating depth and the diffraction efficiency of the reflecting type diffraction element 10b on which the laser light of wavelength 780 nm is reflected.

In this embodiment, on the basis of the characteristics in Figure 3, the grating depth of the reflecting type diffraction element 10a is set to t1 at which the laser light of wavelength 650 nm is diffracted high efficiently, and thereby the diffraction efficiency of the laser light of wavelength 780 nm is set low efficiently enough.

Therefore, the reflecting type diffraction element 10a is arranged at a position onto which the laser light of wavelength 650 nm is irradiated with a light amount enough, and thereby even if the laser light of wavelength 780 nm is irradiated thereon, the diffraction efficiency thereof can be low enough and the occurrence of the flare can be suppressed.

In a same manner as described above, the reflecting type diffraction element 10b is arranged at a position onto which the laser light of wavelength 780 nm is irradiated with a light amount enough, and thereby even if the laser light of wavelength 650 nm is incident thereon, the diffraction efficiency thereof can be low enough and the occurrence of the flare can be suppressed. As described above, the suppression setting device is realized.

For this reason, according to this embodiment, the photodetection element for monitor 7m is integrated with the photodetection device 7, and thereby the number of devices can be decreased and the structure and the adjusting work can be simplified. At the same time, the grating depth of the reflecting type diffraction element 10a is set to t1 at which the laser light of wavelength 650 nm is diffracted high efficiently and therefore the laser light of wavelength 780 nm is diffracted low efficiently enough, and also the grating depth of the reflecting type diffraction element 10b is set to t2 at which the laser light of wavelength 780 nm is diffracted high efficiently and therefore the laser light of wavelength 650 nm is diffracted low efficiently enough. Thereby, the each of the reflecting type diffraction elements 10a and 10b reflects the laser light of the corresponding wavelength at high intensity, and thus the photodetection element for monitor 7m detects the each laser light at high signal to noise ratio and the occurrence of the flare by the laser light of the wavelength other than the corresponding wavelength can be suppressed enough. Therefore, the recording/reproducing operation with respect to the optical recording medium 6 can be performed at high quality.

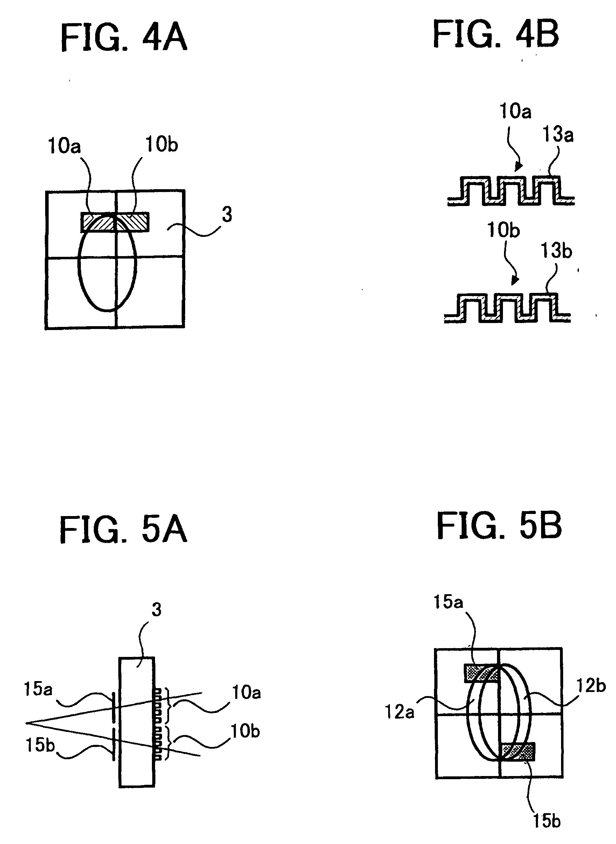

Referring to Figures 4A and 4B, a third embodiment of the present invention will be described. Figures 4A and 4B are views illustrating a main part of this embodiment.

In the second embodiment described above, the grating depths of the reflecting type diffraction elements 10a and 10b are selected and the diffraction efficiency to the laser light of the corresponding wavelength thereof is heightened, and the diffraction efficiency of the laser light of the wavelength other than the corresponding wavelength is lowered, however, the diffraction efficiency thereof cannot be zero and the flare of faint intensity remains.

To the contrary, in this embodiment, as illustrated in Figures 4A and 4B, a wavelength selecting film 13a which reflects the laser light of wavelength 635 nm or 650 nm and transmits the laser light of wavelength 780 nm is coated on the surface of the reflecting type diffraction element 10a, and a wavelength selecting film 13b which reflects the laser light of wavelength 780 nm and transmits the laser light of wavelength 635 nm or 650 nm is coated on the surface of the reflecting type diffraction element 10b.

The structures of the other parts in this embodiment are the same as those in the second embodiment, and therefore the repeated description will be omitted.

In this embodiment, the laser light of wavelength 635 nm or 650 nm which is irradiated to the reflecting type diffraction element 10a is reflected on the reflecting type diffraction element 10a, and the laser light of wavelength 780 nm which is irradiated to the reflecting type diffraction element 10a is transmitted through the reflecting type diffraction element 10a. Further, the laser light of wavelength 780 nm which is irradiated to the reflecting type diffraction element 10b is reflected on the reflecting type diffraction element 10b, and the laser light of wavelength 635 nm or 650 nm which is irradiated to the reflecting type diffraction element 10b is transmitted through the reflecting type diffraction element 10b. Therefore, only either the laser light of wavelength 635 nm or 650 nm, or that of wavelength 780 nm, is selected and is incident onto the photodetection element for monitor 7m, and the occurrence of the flare can be completely prevented. As described above, the suppression setting device is realized.

For this reason, according to this embodiment, the photodetection element for monitor 7m is integrated with the photodetection device 7, and thereby the number of devices can be decreased and the structure and the adjusting work can be simplified. At the same time, the wavelength selecting film 13a which reflects the laser light of wavelength 635 nm or 650 nm, and transmits the laser light of wavelength 780 nm, is coated on the surface of the reflecting type diffraction element 10a, and the wavelength selecting film 13b which reflects the laser light of wavelength 780 nm, and transmits the laser light of wavelength 635 nm or 650 nm, is coated on the surface of the reflecting type diffraction element 10b. Thereby, the occurrence of the flare can be prevented and the recording/reproducing operation with respect to the optical recording medium 6 is possible at high quality.

Referring to Figures 5A to 5B, a forth embodiment of the present invention will be described. Figures 5A to 5B are views illustrating a main part of this embodiment.

In the third embodiment described above, the wavelength selecting films 13a and 13b are coated on the surfaces of the reflecting type diffraction elements 10a and 10b respectively, however, each grating pitch of the reflecting type diffraction elements 10a and 10b is small period such as approximate 1 µm in some cases. On such minute processing surfaces, the wavelength selecting films 13a and 13b which are configured as a multilayer film are hard to be coated, or the surfaces are buried by the multilayer film in some cases.

In order to solve the problem, in this embodiment, as illustrated in Figures 5A and 5B, the wavelength selecting film 15a which transmits the laser light of wavelength 635 nm or 650 nm and reflects the laser light of wavelength 780 nm, and the wavelength selecting film 15b which transmits the laser light of wavelength 780 nm and reflects the laser light of wavelength 635 nm or 650 nm, are coated on a surface of a side of the laser diodes 1 and 2 in the hologram device 3. On a surface of a side of the collimator lens in the hologram device 3, the reflecting type diffraction element 10a of the laser light of wavelength 635 nm or 650 nm which faces the wavelength selecting film 15a, and the reflecting type diffraction element 10b of the laser light of wavelength 780 nm which faces the wavelength selecting film 15b, are formed respectively.

The structures of the other parts in this embodiment are the same as those in the third embodiment, and therefore the repeated description will be omitted.

In this embodiment, the laser light of wavelength 635 nm or 650 nm is transmitted through the wavelength selecting film 15a and is reflected on the reflecting type diffraction element 10a, and the laser light thereof is transmitted through the wavelength selecting film 15a again and is incident onto the photodetection element for monitor 7m. As a result, the output level of the laser light of wavelength 635 nm or 650 nm is monitored by suppressing the occurrence of the flare. In a same manner as described above, the laser light of wavelength 780 nm is transmitted through the wavelength selecting film 15b and is reflected on the reflecting type diffraction element 10a, and the laser light thereof is transmitted through the wavelength selecting film 15b again and is incident onto the photodetection element for monitor 7m. As a result, the output level of the laser light of wavelength 780 nm is monitored by suppressing the occurrence of the flare. As described above, the suppression setting device is realized.

In this case, as described above in the second embodiment, if the grating depths of the reflecting type diffraction elements 10a and 10b are selected so that the laser light of the corresponding wavelength of the respective wavelengths can be high in diffraction efficiency and the laser light of the wavelength other than the corresponding wavelength thereof can be low in diffraction efficiency, the occurrence of the flare can be further suppressed.

In this embodiment, when the wavelength selecting films 15a and 15b of multilayer film are difficult to be formed close, the wavelength selecting films 15a and 15b can be formed, with them separated each other as corresponding an upper end and a lower end of the emitted patterns 12a and 12b of the laser lights as illustrated in Figure 5B.

For this reason, according to this embodiment, the photodetection element for monitor 7m is integrated with the photodetection device 7, and thereby the number of devices can be decreased and the structure and the adjusting work can be simplified. At the same time, the wavelength selecting films 15a and 15b and the reflecting type diffraction elements 10a and 10b are formed as facing each other in the hologram device 3 respectively, and thereby the wavelength selecting films 15a and 15b can be accurately formed with respect to the reflecting type diffraction elements 10a and 10b of small grating pitch, and therefore the occurrence of the flare can be prevented and the recording/reproducing operation with respect to the optical recording medium 6 is possible at high quality.

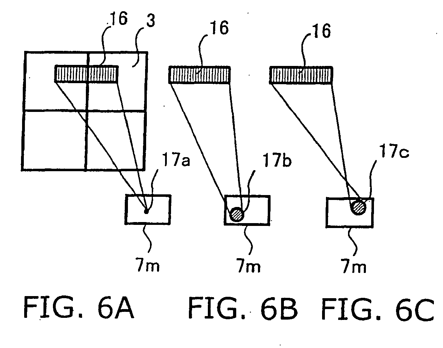

Referring to Figures 6A to 6C, a fifth embodiment of the present invention will be described. Figures 6A to 6C are views illustrating a main part of this embodiment.

In this embodiment, instead of the reflecting type diffraction elements 10a and 10b in the embodiments described above, one reflecting type diffraction element 16 which reflects and diffracts a laser light of wavelength 710 nm which is an almost intermediate wavelength between the laser light of wavelength 635 nm or 650 nm and that of wavelength 780 nm, is formed on the hologram device 3.

The structures of the other parts in this embodiment are the same as those in the first embodiment, and therefore the repeated description will be omitted.

In this embodiment, as illustrated in Figure 6A, the laser light of wavelength 710 nm is focused onto a center position of the photodetection element for monitor 7m as a spot 17a of small diameter, however, the laser light of wavelength 650 nm is focused onto a neighborhood of one end of the photodetection element 7m as a spot 17b of wide diameter as illustrated in Figure 6B, and the laser light of wavelength 780 nm is focused onto a neighborhood of the other end thereof as a spot 17c of wide diameter as illustrated in Figure 6C.

In this case, if an area of the photodetection element for monitor 7m is large, the output level of the laser light can be monitored as considering to the influence of chromatic aberration of approximate 70 nm enough.

For this reason, according to this embodiment, the photodetection element for monitor 7m is integrated with the photodetection device 7 and the reflecting type diffraction element is configured by one reflecting type diffraction element 16. Thereby, the number of devices can be decreased and the structure and the adjusting work can be simplified. In addition, the laser light of wavelength 635 nm or 650 nm and that of wavelength 780 nm can be detected on the photodetection element for monitor 7m practically enough, and thereby the wavelength selecting film is unnecessary to be formed, and the flare does not occur and therefore the recording/reproducing operation with respect to the optical recording medium 6 is possible at high quality.

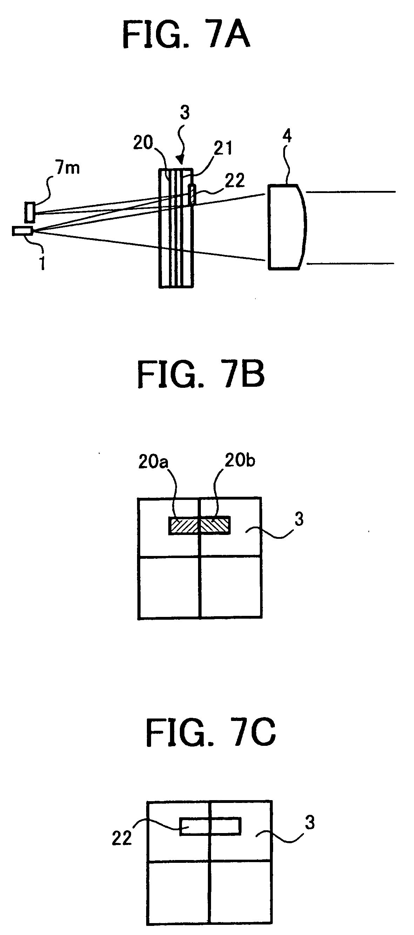

Referring to Figures 7A to 7C, a sixth embodiment of the present invention will be described. Figures 7A to 7C are views illustrating a main part of this embodiment.

In this embodiment, as illustrated in Figures 7A, 7B, and 7C, in the hologram device 3 of a polarization diffraction device, a polarization hologram element 20a for the laser light of wavelength 635 nm or 650 nm and a polarization hologram element 20b for the laser light of wavelength 780 nm are arranged next to each other, and a quarter wavelength plate 21 is integrated with the polarization hologram elements 20a and 20b, and a reflection film 22 is formed as facing the polarization hologram elements 20a and 20b on a surface of a side of the collimator lens 4 in the hologram device 3. The grating depth of the polarization hologram element 20a is set so as to be high in the diffraction efficiency for the laser light of wavelength 635 nm or 650 nm and so as to be low in diffraction efficiency for the laser light of wavelength 780 nm. The grating depth of the polarization hologram element 20b is set so as to be low in diffraction efficiency for the laser light of wavelength 635 nm or 650 nm and so as to be high in the diffraction efficiency for the laser light of wavelength 780 nm.

In this embodiment, the laser light of wavelength 635 nm or 650 nm is transmitted through the polarization hologram elements 20a and 20b and the quarter wavelength plate 21 and is reflected on the reflection film 22, and it is transmitted through the quarter wavelength plate 21 again and thereby the laser light whose polarization direction rotates at 90 degrees is incident to the polarization hologram elements 20a and 20b. In the polarization hologram element 20a which is high in diffraction efficiency for the laser light of wavelength 635 nm or 650 nm, most of the laser light of wavelength 635 nm or 650 nm is incident onto the photodetection element for monitor 7m, and therefore the output level of the laser light of wavelength 635 nm or 650 nm can be monitored.

The laser light of wavelength 780 nm is transmitted through the polarization hologram elements 20a and 20b and the quarter wavelength plate 21 and is reflected on the reflection film 22, and it is transmitted through the quarter wavelength plate 21 again and thereby the laser light whose polarization direction rotates at 90 degrees is incident to the polarization hologram elements 20a and 20b. In the polarization hologram element 20b which is high in diffraction efficiency for the laser light of wavelength 780 nm, most of the laser light of wavelength 780 nm is incident onto the photodetection element for monitor 7m, and therefore the output level of the laser light of wavelength 780 nm can be monitored. As described above, the suppression setting device is realized.

For this reason, according to this embodiment, in the hologram device 3, the polarization hologram element 20a which is high in diffraction efficiency for the laser light of wavelength 635 nm or 650 nm and the polarization hologram element 20b which is high in diffraction efficiency for the laser light of wavelength 780 nm are integrated with the quarter wavelength plate 21, and the reflection film 22 is formed on a surface of a side of the collimator lens 4 in the hologram device 3. Further, the photodetection element for monitor 7m is integrated with the photodetection device 7. Thereby, the number of devices can be decreased and the structure and the adjusting work can be simplified. At the same time, the flare of the laser light of wavelength 635 nm or 650 nm or that of wavelength 780 nm is prevented from occurring, and the output level of the laser light is accurately monitored, and therefore, the recording/reproducing operation with respect to the optical recording medium 6 is possible at high quality.

Referring to Figure 8, a seventh embodiment of the present invention will be described. Figure 8 is a view illustrating a main part of this embodiment.

In this embodiment, instead of the selection of wavelength in the sixth embodiment by the polarization hologram elements 20a and 20b described above, the wavelength is selected by a reflection film. As illustrated in Figure 8, instead of the reflection film 22 in the sixth embodiment, a reflection film 23a which reflects the laser light of wavelength 635 nm or 650 nm and transmits the laser light of wavelength 780 nm is arranged at a position facing the polarization hologram element 20a, and a reflection film 23b which reflects the laser light of wavelength 780 nm and transmits the laser light of wavelength 635 nm or 650 nm is arranged at a position facing the polarization hologram element 20b.

In this embodiment, the laser light of wavelength 635 nm or 650 nm is transmitted through the polarization hologram elements 20a and 20b and the quarter wavelength plate 21, and it is incident to the reflection films 23a and 23b and is reflected on the reflection film 23a. The laser light is transmitted through the quarter wavelength plate 21 again, and the laser light whose polarization direction rotates at 90 degrees is incident to the photodetection element for monitor 7m by the polarization hologram element 20a so that the output level of the laser light of wavelength 635 nm or 650 nm is monitored.

The laser light of wavelength 780 nm is transmitted through the polarization hologram elements 20a and 20b and the quarter wavelength plate 21, and it is incident to the reflection films 23a and 23b and is reflected on the reflection film 23b. The laser light is transmitted through the quarter wavelength plate 21 again, and the laser light whose polarization direction rotates at 90 degrees is incident to the photodetection element for monitor 7m by the polarization hologram element 20b so that the output level of the laser light of wavelength 780 nm is monitored. As described above, the suppression setting device is realized.

For this reason, according to this embodiment, in the hologram device 3, the polarization hologram elements 20a and 20b are integrated with the quarter wavelength plate 21, and the reflection film 23a which has high reflectance for the laser light of wavelength 635 nm or 650 nm and the reflection film 23b which has high reflectance for the laser light of wavelength 780 nm are formed on a surface of the collimator lens 4 in the hologram device 3. Thereby, the number of devices is decreased and the structure and the adjusting work can be simplified. At the same time, the flare of the laser light of wavelength 635 nm or 650 nm or that of wavelength 780 nm is prevented from occurring, and the output level of the laser light is accurately monitored, and therefore, the recording/reproducing operation with respect to the optical recording medium 6 is possible at high quality.

An eighth embodiment of the present invention will be described.

When the monitor detection of the laser light is performed by the light diffraction with the polarization hologram element as already described in the sixth and the seventh embodiments, the grating pitch needs to be set small and the diffraction angle needs to be set large in order to convert a divergent light to a convergent light.

Usually, as material of the polarization hologram element, LiNbO₃ or a liquid crystal is used, however, the materials are hard to be processed so that the grating pitch can be small, and the pitch of 3 µm is a limit presently.

In order to solve the problem, in this embodiment, mainly an organic group macromolecule film of birefringence such as a polyimide drawn film, a polyester film, or a polycarbonate film is used, and thereby, the polarization hologram element is formed.

The structures of the other parts in this embodiment are the same as those in the sixth or the seventh embodiment, and therefore the repeated description will be omitted.

According to this embodiment, the polarization hologram element is made from mainly the organic group macromolecule film of birefringence such as the polyimide drawn film, the polyester film, or the polycarbonate film, and thereby the technical advantage obtained in the sixth or the seventh embodiment can be realized.

According to one aspect of the present invention, in an optical pickup apparatus, a plurality of laser diodes to emit laser lights of different wavelengths respectively, and a photodetection device to detect each of the laser lights are installed, and the each of the laser lights from the laser diodes is irradiated onto a signal recording surface of an optical recording medium by way of a diffraction type optical device and the each of reflection lights from the signal recording medium is detected on the photodetection device by way of the diffraction type optical device so that recording/reproducing with respect to the optical recording medium is performed, however, the diffraction type optical device includes reflecting type diffraction elements to reflect and diffract each laser light of a corresponding wavelength in the laser lights from the light diodes, to the photodetection device so that the each of the laser lights is monitored, and a laser light other than a laser light of the corresponding wavelength is suppressed in the reflecting type diffraction elements by a suppression setting device. Therefore, by monitoring the laser lights of plural wavelengths with one photodetection device, the size of the apparatus can be small by the reduction of the number of devices and the manufacturing and the adjusting of the apparatus can be simplified so that the manufacturing cost can be low, and, in the reflecting type diffraction elements, the laser light other than the laser light of the corresponding wavelength is suppressed, and therefore the flare light is suppressed and the each laser light can be monitored stably and high accurately.

In this case, the suppression setting device performs each of the following processes or combination of them, such as process in that the each plural reflecting type diffraction element is arranged a position such that only the laser light of the corresponding wavelength in the laser lights is diffracted, process in that only the diffraction efficiency of the laser light of the corresponding wavelength is heighten, and process in that coating is performed so as to diffract only the laser light of the corresponding wavelength, and thereby the technical advantages described above can be realized by suppressing the occurrence of the flare light and improving signal to noise ratio further.

According to another aspect of the present invention, in an optical pickup apparatus, a plurality of laser diodes to emit laser lights of different wavelengths respectively, and a photodetection device to detect each of the laser lights are installed, and the each of the laser lights from the laser diodes is irradiated onto a signal recording surface of an optical recording medium by way of a diffraction type optical device and the each of reflection lights from the signal recording medium is detected on the photodetection device by way of the diffraction type optical device so that recording/reproducing with respect to the optical recording medium is performed, however, the diffraction type optical device includes a reflecting type diffraction element to reflect and diffract a laser light of an intermediate wavelength between the wavelengths of the laser lights onto a center position in the photodetection device so that the each of the laser lights of wavelength 635 nm or 650 nm and 780 nm can be monitored practically enough. Therefore, by one reflecting type diffraction element, the manufacturing of the apparatus can be simplified and can be low cost.

According to another aspect of the present invention, in an optical pickup apparatus, a plurality of laser diodes to emit laser lights of different wavelengths respectively, and a photodetection device to detect each of the laser lights are installed, and the each of the laser lights from the laser diodes is irradiated onto a signal recording surface of an optical recording medium by way of a diffraction type optical device and each of reflection lights from the signal recording medium is detected on the photodetection device by way of the diffraction type optical device so that recording/reproducing with respect to the optical recording medium is performed. In this case, the diffraction type optical device has reflecting type diffraction elements, each of which corresponds to each of the wavelengths and the each of which has diffraction efficiency depending on a polarization direction of an incident light, and each of the reflection lights on the reflecting type diffraction elements is diffracted at high diffraction efficiency with respect to the corresponding wavelength so that monitor detection of the each of the laser lights is performed. Therefore, two kinds of holograms which are a polarization hologram and a hologram for monitor detection, which are necessary conventionally, can be made one kind of hologram, and thus the number of devices can be decreased, and the manufacturing and the adjusting of the apparatus can be simplified and the manufacturing cost can be reduced.

In this case, the suppression setting device sets each of the reflecting type diffraction elements to suppress to reflect the laser light other than the laser light of the corresponding wavelength to the photodetection device, and thereby the flare light can be greatly suppressed. Further, the polarization hologram is made from an organic group macromolecule film, and thereby a grating of small pitch can be formed and a diffracted spot of high quality which is low in aberration can be formed.

Obviously, numerous modifications and variations of the present invention are possible in light of the above teachings. It is therefore to be understood that within the scope of the appended claims, the invention may be practiced otherwise than as specifically described herein.

The present application contains subject matter disclosed in Japanese Patent Application No.2000-156,986 filed on May 26, 2000 in the Japan Patent Office, to which the present application claims priority, and the entire contents of which are incorporated herein by reference.

## Claims

1. An optical pickup apparatus for reading/reproducing data on an optical recording medium, comprising:
a plurality of laser emitting means for emitting laser light of different wavelengths respectively;
photodetecting means (7, 7m, 27) for detecting the laser light;
diffracting means for transmitting the laser light from each of the plurality of laser emitting means to the optical recording medium, and for diffracting the laser light from the optical recording medium to a detector portion (27) of the photodetecting means, **characterized in that**
the photodetecting means has a monitor portion (7m) integrated with said detector portion; and
wherein
the diffracting means includes a plurality of reflecting type diffraction elements (10a, 10b), each configured to reflect and diffract to the monitor portion of the photodetecting means, laser light of a wavelength corresponding to one of the plurality of light emitting means, so that the photodetecting means can detect the laser light of the corresponding wavelength for monitoring each laser light, and the plurality of reflecting type diffraction elements are set to suppress reflection of laser light other than the laser light having the corresponding wavelength.

2. The optical pickup apparatus of claim 1, wherein:
said laser emitting means are laser diodes (1, 2);
said photodetection means is a photodetection device (7, 7m); and
said diffraction means is a diffraction type optical device (3).

3. The optical pickup apparatus of claim 2, wherein the plurality of reflecting type diffraction elements are arranged at a position such that only laser light of the corresponding wavelength is diffracted.

4. The optical pickup apparatus of claim 2 or 3, wherein the plurality of reflecting type diffraction elements have a higher diffraction efficiency for laser light of the corresponding wavelength compared to other wavelengths.

5. The optical pickup apparatus of claim 2, 3 or 4, wherein each of the plurality of reflecting type diffraction elements has a coating (13a, 13b) for diffracting the laser light of the corresponding wavelength.

6. The optical pickup apparatus of claim 2, 3 or 4, wherein the plurality of reflecting type diffraction elements are formed on the surface of the diffraction type optical device on the side facing the optical recording medium, and a coating (15a, 15b) is applied on the surface of the diffraction type optical device on the side facing the laser diodes such that only the laser light of the corresponding wavelength is transmitted.

7. An optical pickup apparatus for reading/reproducing data on an optical recording medium (6), comprising:
a plurality of laser emitting means (1, 2) for emitting laser light of different wavelengths respectively;
photodetecting means (7, 7m, 27) for detecting the laser light;
diffracting means (3) for transmitting the laser light from the plurality of laser emitting means to the optical recording medium, and for diffracting the laser light from the optical recording medium to a detector portion (27) of the photodetecting means, **characterized in that**
the photodetecting means has a monitor portion (7m) integrated with said detector portion; and
wherein
the diffracting means includes a reflecting type diffraction element (16) configured to reflect and diffract laser light of an intermediate wavelength between the wavelengths of the laser light from the laser emitting means onto a center position of the monitor portion of the photodetecting means, and the monitor portion of the photodetecting means is configured for detecting the laser light from the reflecting type diffraction element for monitoring the laser light from each of the laser emitting means.

8. The optical pickup apparatus of claim 7, wherein
said laser emitting means are a plurality of laser diodes (1, 2);
said photodetection means is a photodetection device (7, 7m, 27); and
said diffracting means is a diffraction type optical device (3).

9. An optical pickup apparatus for reading/reproducing data on an optical recording medium (6), comprising:
a plurality of laser emitting means (1, 2) for emitting laser light of different wavelengths respectively;
photodetecting means (7, 7m, 27) for detecting the laser light;
diffracting means (3) for transmitting the laser light from each of the plurality of laser emitting means to the optical recording medium, and for diffracting the laser light from the optical recording medium to a detector portion (27) of the photodetecting means, **characterized in that**
the photodetecting means has a monitor portion (7m) integrated with said detector portion; and
wherein
the diffracting means (3) is a polarization diffracting means which has polarisation hologram type optical elements (20a, 20b), each of which corresponds to one of the wavelengths, the diffraction efficiency of each element depending on the polarization direction of incident light, and wherein each element has high diffraction efficiency with respect to the corresponding wavelength, and the diffracting means has a reflective film configured to reflect incident light onto the monitor portion of the photodetecting means.

10. The optical pickup apparatus of claim 9, wherein:
said laser emitting means are a plurality of laser diodes (1, 2);
said photodetection means is a photodetection device (7, 7m, 27); and
said diffraction means (3) is a polarization diffraction device.

11. The optical pickup apparatus of claim 10, wherein the reflective film comprises a plurality of reflective portions, each of which is set to suppress reflection of laser light other than laser light of the corresponding wavelength.

12. The optical pickup apparatus of claim 10 or 11, wherein the polarization diffraction device is made from an organic group macromolecule film.

13. An optical pickup method for reading/reproducing data on an optical recording medium, comprising:
emitting laser light of different wavelengths respectively using a plurality of laser diodes;
detecting the laser light using a photodetection device;
transmitting the laser light from each of the plurality of laser diodes to the optical recording medium, and diffracting the laser light from the optical recording medium to a detector portion of the photodetection device using a diffraction type optical device; **characterized by**
reflecting and diffracting to the photodetection device, the laser light of each wavelength of the laser light from the plurality of light diodes, using a plurality of reflecting type diffraction elements in the diffraction type optical device;
detecting the laser light of each wavelength for monitoring the laser light using a monitor portion integrated with said detector portion of the photodetection device; and
setting each of the plurality of reflecting type diffraction elements to suppress reflection of laser light other than the laser light having the corresponding wavelength.

14. An optical pickup method for reading/reproducing data on an optical recording medium, comprising:
emitting laser light of different wavelengths respectively using a plurality of laser diodes;
detecting the laser light using a photodetection device;
transmitting the laser light from the plurality of laser diodes to the optical recording medium, and diffracting the laser light from the optical recording medium to a detector portion of the photodetection device using a diffraction type optical device; **characterized by**
reflecting and diffracting laser light of an intermediate wavelength between the wavelengths of the laser light from the laser diodes, onto a center position of a monitor portion integrated with said detector portion of the photodetection device using a reflecting type diffraction element in the diffraction type optical device; and
detecting the laser light from the reflecting type diffraction element for monitoring the laser light from each of them.

15. An optical pickup method for reading/reproducing data on an optical recording medium, comprising:
emitting laser light of different wavelengths respectively using a plurality of laser diodes;
detecting the laser light using a photodetection device;
transmitting the laser light from the plurality of laser diodes to the optical recording medium, and diffracting the laser light from the optical recording medium to a detector portion of the photodetection device using a diffraction type optical device; **characterized by**
diffracting at an efficiency depending on the polarization direction of incident light, and diffracting at high efficiency with respect to the corresponding wavelength, by using a diffraction type optical device which has polarization hologram type optical elements, each of which corresponds to one of the wavelengths of laser light, as the diffraction type optical device; and
reflecting light incident on said diffraction type optical device onto a monitor portion integrated with said detector portion of the photodetection device using a reflective film on said diffraction type optical device.

## Patentansprüche

1. Optischer Erfassungsapparat bzw. optischer Pickup-Appart zum Lesen/Reproduzieren von Daten auf einem optischen Aufzeichnungsmedium, der Folgendes umfasst:
eine Anzahl bzw. Vielzahl von Laser emittierenden Mitteln zum jeweiligen Emittieren von Laserlicht unterschiedlicher Wellenlängen;
Photodetektionsmittel (7, 7m, 27) zum Detektieren des Laserlichts;
Ablenkmittel zum Übertragen des Laserlichts von einem jeden der Anzahl bzw. Vielzahl von Laser emittierenden Mitteln zu dem optischen Aufzeichnungsmedium und zum Ablenken bzw. Beugen des Laserlichts von dem optischen Aufzeichnungsmedium zu einem Detektorabschnitt (27) des Photodetektionsmittels, **dadurch gekennzeichnet, dass**
das Photodetektionsmittel einen Überwachungs- bzw. Monitorabschnitt (7m) hat, der mit dem Detektorabschnitt einstückig ist bzw. darin integriert ist; und
wobei
das Ablenkmittel eine Anzahl bzw. Vielzahl von Ablenkelementen (10a, 10b) von Reflexionstyp enthält, wobei jedes konfiguriert ist, um zu dem Überwachungs- bzw. Monitorabschnitt des Photodetektionsmittels zu reflektieren und abzulenken bzw. zu beugen, und zwar Laserlicht einer Wellenlänge, die einem der Anzahl bzw. Vielzahl Licht emittiereuder Mittel entspricht, so dass das Photodetektionsmittel das Laserlicht der entsprechenden Wellenlänge detektieren kann, um jedes Laserlicht zu überwachen, und wobei die Anzahl bzw. Vielzahl von Ablenkelementen des Reflexionstyps eingestellt sind, um eine Reflexion von Laserlicht, bei der es sich nicht um das Laserlicht mit der entsprechenden Wellenlänge handelt, zu unterdrücken.

2. Optischer Erfassungsapparat bzw. optischer Pickup-Apparat nach Anspruch 1, bei welchem:
die Laser emittierenden Mittel Laserdioden (1, 2) sind;
das Photodetektionsmittel eine Photodetektionsvorrichtung bzw. ein Photodetektionsbauelement (7, 7m) ist; und
das Ablenkmittel eine optische Vorrichtung (3) vom Ablenktyp bzw. Beugungstyp ist.

3. Optischer Erfassungsapparat bzw. Pickup-Appart nach Anspruch 2, bei welchem die Anzahl bzw. Vielzahl von Ablenkelementen vom Reflexionstyp bei einer Position angeordnet sind, so dass nur Laserlicht der entsprechenden Wellenlänge abgelenkt bzw, gebeugt wird,

4. Optischer Erfassungsapparat bzw. optischer Pickup-Apparat nach Anspruch 2 oder 3, bei welchem die Anzahl bzw. Vielzahl von Ablenkelementen vom Reflexionstyp eine höhere Ablenkeffizienz bzw. Beugungseffizienz für Laserlicht der entsprechenden Wellenlänge haben, und zwar verglichen mit anderen Wellenlängen.

5. Optischer Erfassungsapparat bzw. optischer Pickup-Apparat nach Anspruch 2, 3 oder 4, bei welchem ein jeder der Anzahl bzw. Vielzahl von Ablenkelementen vom Reflexionstyp eine Schicht (13a, 13b) zum Ablenken bzw. Beugen des Laserlichts der entsprechenden Wellenlänge hat.

6. Optischer Erfassungsapparat bzw. optischer Pickup-Appart nach Anspruch 2, 3 oder 4, bei welchem die Anzahl bzw. Vielzahl von Ablenkelementen vom Reflexionstyp auf der Oberfläche der optischen Vorrichtung vom Ablenktyp bzw. Beugungstyp auf der Seite ausgebildet sind, die dem optischen Aufzeichnungsmedium gegenüberliegt, und eine Schicht bzw. ein Überzug (15a, 15b) auf der Oberfläche der optischen Vorrichtung vom Ablenktyp bzw. Beugungstyp auf der Seite angebracht wird, die den Laserdioden gegenüberliegt, und zwar so dass nur das Laserlicht der entsprechenden Wellenlänge übertragen wird.

7. Optischer Erfassungsapparat bzw. optischer Pickup-Apparat zum Lesen/Reproduzieren von Daten auf einem optischen Aufzeichnungsmedium (6), der Folgendes umfasst:
eine Anzahl bzw. Vielzahl von Laser emittierenden Mitteln (1, 2) zum jeweiligen Emittieren von Laserlicht unterschiedlicher Wellenlängen;
Photodetektionsmittel (7, 7m, 27) zum Detektieren des Laserlichts;
Ablenkmittel (3) zum Übertragen des Laserlichts von der Anzahl bzw. Vielzahl von Laser emittierenden Mitteln zu dem optischen Aufzeichnungsmedium und zum Ablenken bzw. Beugen des Laserlichts von dem optischen Aufzeichnungsmedium zu einem Detektorabschnitt (27) des Photodetektionsmittels, **dadurch gekennzeichnet, dass**
das Photodetektionsmittel einen Überwachungsabschnitt bzw. Monitorabschnitt (7m) hat, der mit dem Detektorabschnitt einstückig ist bzw. in diesen integriert ist; und
wobei
das Ablenkmittel ein Ablenkelement (16) vom Reflexionstyp enthält, das konfiguriert ist, um Laserlicht einer Zwischeawellenlänge zwischen den Wellenlängen des Laserlichts von dem Laser emittierenden Mitteln auf eine mittige Position des Überwachungsabschnitts des Photodetektionsmittels zu reflektieren und abzulenken bzw. zu beugen, und der Überwachungsabschnitt bzw. Monitorabschnitt des Photodetektionsmittels konfiguriert ist, um das Laserlicht von dem Ablenkelement vom Reflexionstyp zu detektieren, um das Laserlicht einem jedem der Laser emittierenden Mittel zu überwachen.

8. Optischer Erfassungsapparat bzw, optischer Pickup-Apparat nach Anspruch 7, bei welchem
die Laser emittierenden Mittel eine Vielzahl von Laserdioden (1, 2) sind;
das Photodetektionsmittel eine Photodetektionsvorrichtung bzw. ein Photodetektionsbauelement (7, 7m, 27) ist; und
das Ablenk- bzw. Beugungsmittel eine optische Vorrichtung (3) vom Ablenkungstyp bzw. Beugungstyp ist.

9. Optischer Erfassungsapparat bzw. optischer Pickup-Apparat zum Lesen/Reproduzieren von Daten auf einem optischen Aufzeichnungsmedium (6), der Folgendes umfasst:
eine Anzahl bzw. Vielzahl von Laser emittierenden Mitteln (1, 2), um jeweils Laserlicht unterschiedlicher Wellenlängen zu emittieren;
Photodetektionsmittel (7, 7m, 27), um das Laserlicht zu detektieren;
Ablenkmittel (3), um das Laserlicht von einem jeden der Anzahl bzw. Vielzahl von Laser emittierenden Mitteln zu dem optischen Aufzeichnungsmedium zu übertragen und um das Laserlicht von dem optischen Aufzeichnungsmedium zu einem Detektorabschnitt (27) des Photodetektionsmittels abzulenken bzw. zu beugen, **dadurch gekennzeichnet, dass**
das Photodetektionsmittel einen Überwachungsabschnitt bzw. Monitorabschnitt (7m) hat, der mit dem Detektorabschnitt einstückig ist bzw. darin integriert ist; und
bei welchem
das Ablenkmittel (3) ein Polarisations-Ablenkmittel ist, das optische Elemente (20a, 20b) vom Polarisations-Hologrammtyp hat, wobei jedes davon einer der Wellenlängen entspricht, wobei die Ablenkeffizienz bzw, Beugungseffizienz eines jeden Elements von der Polarisationsrichtung einfallenden Lichts abhängt, und bei welchem jedes Element eine hohe Ablenkeffizienz bzw. Beugungseffizienz bezüglich der entsprechenden Wellenlänge hat und das Ablenkelement einen reflektierenden Film hat, der konfiguriert ist, um einfallendes Licht auf den Überwachungsabschnitt bzw. Monitorabschnitt des Photodetektionsmittels zu reflektieren.

10. Optischer Erfassungsapparat bzw. optischer Pickup-Appart nach Anspruch 9, bei welchem:
das Laser emittierende Mittel eine Anzahl bzw. Vielzahl von Laserdioden (1, 2) sind;
das Photodetektionsmittel eine Photodetektionsvorrichtung bzw. ein Photodetektionsbauelement (7, 7m, 27) ist; und
das Ablenkmittel (3) eine Polarisations-Ablenkvorrichtung bzw. eine Polarisations-Beugungsvorrichtung ist.

11. Optischer Erfassungsapparat bzw. optischer Pickup-Apparat nach Anspruch 10, bei welchem der reflektierende Film eine Anzahl bzw. Vielzahl von reflektierenden Abschnitten umfasst, von denen jeder eingestellt ist, um eine Reflexion von Laserlicht, bei dem es sich nicht um Laserlicht der entsprechenden Wellenlänge handelt, zu unterdrücken.

12. Optischer Erfassungsapparat bzw. optischer Pickup-Apparat nach Anspruch 10 oder Anspruch 11, bei welchem die Polarisations-Ablenkvorrichtung aus einem organischen Gruppen-Makromolekülfilm bzw. einem Makromolekülfilm mit organischen Gruppen gemacht ist.

13. Optisches Erfassungsverfahren bzw. optisches Pickup-Verfahren zum Lesen/Reproduzieren von Daten auf einem optischen Aufzeichnungsmedium, das Folgendes umfasst:
Laserlicht unterschiedlicher Wellenlängen wird jeweilig unter Verwendung einer Anzahl bzw. Vielzahl von Laserdioden emittiert;
das Laserlicht wird unter Verwendung einer Photodetektionsvorrichtung detektiert;
das Laserlicht wird von einer jeden der Anzahl bzw. Vielzahl von Laserdioden zu dem optischen Aufzeichnungsmedium übertragen und das Laserlicht wird von dem optischen Aufzeichnungsmedium zu einem Detektorabschnitt der Photodetektionsvorrichtung unter Verwendung einer optischen Vorrichtung vom Ablenk- bzw. Beugungstyp abgelenkt bzw. gebeugt;
durch Folgendes **gekennzeichnet**:
zu der Photodetektionsvorrichtung wird das Laserlicht einer jeden Wellenlänge des Laserlichts von der Anzahl bzw. Vielzahl von Lichtdioden reflektiert und abgelenkt bzw. gebeugt, und zwar unter Verwendung einer Anzahl bzw. Vielzahl von Ablenk- bzw. Beugungselementen vom Reflexionstyp in der optischen Vorrichtung vom Ablenkungstyp bzw. Beugungstyp;
das Laserlicht einer jeden Wellenlänge wird zum Überwachen es Laserlichts unter Verwendung eines Überwachungsabschnitts detektiert, der mit dem Detektorabschnitt der Photodetektionsvorrichtung einstückig ist bzw, darin integriert ist; und
ein jedes der Anzahl bzw, Vielzahl von Ablenkungselementen vom Reflexionstyp wird eingestellt, um eine Reflexion von Laserlicht zu unterdrücken, bei der es sich nicht um das Laserlicht mit der entsprechenden Länge handelt.

14. Optisches Erfassungsverfahren bzw. optisches Pickup-Verfahren zum Lesen/Reproduzieren von Daten auf einem optischen Aufzeichnungsmedium, das Folgendes umfasst:
Laserlicht unterschiedlicher Wellenlängen wird emittiert, wobei jeweilig eine Anzahl bzw. Vielzahl von Laserdioden verwendet wird;
das Laserlicht wird unter Verwendung einer Photodetektionsvorrichtung detektiert;
das Laserlicht wird von der Anzahl bzw. Vielzahl von Laserdioden zu dem optischen Aufzeichnungsmedium übertragen und das Laserlicht wird von dem optischen Aufzeichnungsmedium zu einem Detektorabschnitt der Photodetektionsvorrichtung abgelenkt bzw. gebeugt, und zwar unter Verwendung einer optischen Vorrichtung vom Ablenktyp bzw. Beugungstyp; durch Folgendes **gekennzeichnet**:
Laserlicht von einer Zwischenwellenlänge zwischen den Wellenlängen des Laserlichts von den Laserdioden wird reflektiert und abgelenkt bzw. gebeugt, und zwar auf einen mittigen Abschnitt eines Überwachungsabschnittes, der in dem Detektorabschnitt der Photodetektionsvorrichtung integriert ist bzw. damit einstückig ist, und zwar unter Verwendung eines Ablenkelements vom Reflexionstyp in der optischen Vorrichtung vom Ablenktyp bzw, Beugungstyp; und
das Laserlicht von dem Ablenkelment vom Reflexionstyp wird detektiert, um das Laserlicht eines jeden davon zu überwachen.

15. Optisches Erfassungsverfahren bzw, optisches Pickup-Verfahren zum Lesen/Reproduzieren von Daten auf einem optischen Aufzeichnungsmedium, das Folgendes umfasst:
Laserlicht unterschiedlicher Wellenlängen wird unter jeweiliger Verwendung einer Anzahl bzw. Vielzahl von Laserdioden emittiert;
das Laserlicht wird unter Verwendung einer Photodetektionsvorrichtung detektiert;
das Laserlicht von der Anzahl bzw. Vielzahl von Laserdioden wird zu dem optischen Aufzeichnungsmedium übertragen und das Laserlicht von dem optischen Aufzeichnungsmedium wird zu einem Detektorabschnitt der Photodetektionsvorrichtung abgelenkt bzw. gebeugt, und zwar unter Verwendung einer optischen Vorrichtung vom Ablenktyp bzw. Beugungstyp;
durch Folgendes **gekennzeichnet**:
mit einer Effizienz, die von der Polarisationsrichtung eines einfallenden Lichts abhängt, wird abgelenkt bzw. gebeugt und mit einer hohen Effizienz bezüglich der entsprechenden Wellenlänge wird abgelenkt bzw. gebeugt, und zwar indem eine optische Vorrichtung vom Ablenktyp bzw. Beugungstyp, die optische Elemente vom Polarisations-Hologrammtyp hat, von denen jedes eines der Wellenlängen des Laserlichts entspricht, als die optische Vorrichtung vom Ablenktyp bzw. Beugungstyp verwendet wird; und
Licht, das auf die optische Vorrichtung vom Ablenktyp bzw. Beugungstyp einfällt wird auf einen Überwachungsabschnitt, der mit dem Detektorabschnitt der Photodetektionsvorrichtung einstückig ist bzw. darin integriert ist, reflektiert, und zwar unter Verwendung eines reflektierenden Films auf der optischen Vorrichtung vom Ablenktyp bzw. Beugungstyp.

## Revendications

1. Apparell capteur optique permettant de lire/reproduire des données sur un support d'enregistrement optique, comprenant :
une pluralité de moyens d'émission laser servant à émettre une lumière laser de longueurs d'onde respectivement différentes ;
un moyen de photodétection (7, 7m, 27) permettant de détecter la lumière laser ;
un moyen de diffraction servant à transmettre la lumière laser venant de chaque moyen de la pluralité de moyens d'émission laser au support d'enregistrement optique et de diffracter la lumière laser venant du support d'enregistrement optique sur une partie de détection (27) du moyen de photodétection,
**caractérisé en ce que** le moyen de photodétection possède une partie de contrôle (7m) Intégrée à ladite partie de détection ; et
le moyen de diffraction comporte une pluralité d'éiéments de diffraction de type réfléchissant (10a, 10b), chacun étant configuré pour réfléchir et diffracter sur la partie de contrôle du moyen de photodétection une lumière laser d'une longueur d'onde qui correspond à un moyen de la pluralité de moyens d'émission de lumière, de sorte que le moyen de photodétection peut déterminer la lumière laser ayant la longueur d'onde correspondante afin de contrôler chaque lumière laser, et la pluralité d'éléments de diffraction du type réfléchissant est ajustée pour réduire la réflexion de la lumière laser qui est autre que la lumière laser possédant la longueur d'onde correspondante.

2. Appareil capteur optique selon la revendication 1, où :
les moyens d'émission laser sont constitués de diodes laser (1, 2);
ledit moyen de photodétection est un dispositif de photodétection (7, 7m) ; et
ledit moyen de diffraction est un dispositif optique du type diffraction (3).

3. Appareil capteur optique selon la revendication 2, où la pluralité d'éléments de diffraction du type réfléchissant est disposée en une position telle que seule la lumière laser ayant la longueur d'onde correspondante soit diffractée.

4. Appareil capteur optique selon la revendication 2 ou 3, où la pluralité d'éléments de diffraction du type réfléchissant possède un rendement de diffraction supérieur pour la lumière laser ayant la longueur d'onde correspondante, par comparaison avec les autres longueurs d'onde.

5. Appareil capteur optique selon la revendication 2, 3 ou 4, où chaque élément de la pluralité d'éléments de diffraction du type réfléchissant possède un revêtement (13a, 13b) servant à diffracter la lumière laser ayant la longueur d'onde correspondante.

6. Appareil capteur optique selon la revendication 2, 3 ou 4, où la pluralité d'éléments de diffraction du type réfléchissant est formée sur la surface du dispositif optique de type diffraction sur le côté qui regarde le support d'enregistrement optique, et un revêtement (15a, 15b) est appliqué à la surface du dispositif optique de type diffraction sur le côté regardant les diodes laser, de sorte que seule la lumière laser ayant une longueur d'onde correspondante est transmise.

7. Appareil capteur optique permettant de lire/reproduire des données sur un support d'enregistrement optique, comprenant :
une pluralité de moyens d'émission laser (1, 2) servant à émettre une lumière laser de longueurs d'onde respectivement différentes ;
un moyen de photodétection (7, 7m, 27) permettant de détecter la lumière laser ;
un moyen de diffraction (3) servant à transmettre la lumière laser venant de chaque moyen de la pluralité de moyens d'émission laser au support d'enregistrement optique et de diffracter la lumière laser venant du support d'enregistrement optique (6) sur une partie de détection (27) du moyen de photodétection,
**caractérisé en ce que** le moyen de photodétection possède une partie de contrôle (7m) intégrée à ladite partie de détection ; et
le moyen de diffraction comporte un élément de diffraction du type réfléchissant (16) configuré pour réfléchir et diffracter la lumière laser ayant une longueur d'onde intermédiaire entre les longueurs d'ondes de la lumière laser venant des moyens d'émission laser sur la position centrale de la partie de contrôle du moyen de photodétection, et la partie de contrôle du moyen de photodétection est configurée pour déterminer la lumière laser venant de l'élément de diffraction du type réfléchissant afin de contrôler la lumière laser venant de chacun des moyens d'émission laser.

8. Appareil capteur optique selon la revendication 7, où :
les moyens d'émission laser sont constitués de diodes laser (1, 2) ;
ledit moyen de photodétection est un dispositif de photodétection (7, 7m, 27) ; et
ledit moyen de diffraction est un dispositif optique du type diffraction (3).

9. Appareil capteur optique permettant de lire/reproduire des données sur un support d'enregistrement optique (6), comprenant :
une pluralité de moyens d'émission laser (1, 2) servant à émettre une lumière laser de longueurs d'onde respectivement différentes ;
un moyen de photodétection (7, 7m, 27) permettant de détecter la lumière laser ;
un moyen de diffraction (3) servant à transmettre la lumière laser venant de chaque moyen de la pluralité de moyens d'émission laser au support d'enregistrement optique et de diffracter la lumière laser venant du support d'enregistrement optique sur une partie de détection (27) du moyen de photodétection,
**caractérisé en ce que** le moyen de photodétection possède une partie de contrôle (7m) intégrée à ladite partie de détection ; et
le moyen de diffraction (3) est un moyen de diffraction par polarisation qui possède des éléments optiques du type hologramme de polarisation (20a, 20b), dont chacun correspond à l'une des longueurs d'ondes, le rendement de diffraction de chaque élément étant fonction de la direction de polarisation de la lumière incidente, et où chaque élément possède un rendement de diffraction élevé par rapport à la longueur d'onde correspondante, et le moyen de diffraction possède une pellicule réfléchissante qui est configurée pour réfléchir la lumière incidente arrivant sur la partie de contrôle du moyen de photodétection.

10. Appareil capteur optique selon la revendication 9, où :
les moyens d'émission laser sont constitués de diodes laser (1, 2) ;
ledit moyen de photodétection est un dispositif de photodétection (7, 7m, 27) ; et du type
ledit moyen de diffraction est un dispositif optique du type diffraction (3).

11. Appareil capteur optique selon la revendication 10, où la pellicule réfléchissante comprend une pluralité de parties réfléchissantes, qui sont chacune ajustées pour réduire la réflexion de la lumière laser autre que la lumière laser ayant la longueur d'onde correspondante.

12. Appareil capteur optique selon la revendication 10 ou 11, où le dispositif de diffraction par polarisation est fait à partir d'une pellicule de macromolécules d'un groupe organique.

13. Procédé de lecture optique permettant de lire/reproduire des données sur un support d'enregistrement optique, comprenant les opérations suivantes :
émettre une lumière laser ayant des longueurs d'ondes différentes en utilisant respectivement une pluralité de diodes laser ;
détecter la lumière laser en utilisant un dispositif de photodétection ;
transmettre la lumière laser de chaque diode de la pluralité de diodes laser au support d'enregistrement optique, et faire diffracter la lumière laser venant du support d'enregistrement optique sur une partie de détection du dispositif de photodétection en utilisant un dispositif optique du type diffraction ;
**caractérisé par** les opérations suivantes :
faire réfléchir et diffracter sur le dispositif de photodétection la lumière laser de chaque longueur d'onde de la lumière laser venant de la pluralité de diodes laser, en utilisant une pluralité d'éléments de diffraction du type réfléchissant dans le dispositif optique du type diffraction ;
détecter la lumière laser de chaque longueur d'onde afin de contrôler la lumière laser en utilisant une partie de contrôle intégrée à ladite partie de détection du dispositif de photodétection ; et
ajuster chaque élément de la pluralité d'éléments de diffraction du type réfléchissant afin de réduire la réflexion de la lumière laser autre que la lumière laser qui possède la longueur d'onde correspondante.

14. Procédé de lecture optique permettant de lire/reproduire des données sur un support d'enregistrement optique, comprenant les opérations suivantes :
émettre une lumière laser ayant des longueurs d'ondes différentes en utilisant respectivement une pluralité de diodes laser ;
détecter la lumière laser en utilisant un dispositif de photodétection ;
transmettre la lumière laser de la pluralité de diodes laser au support d'enregistrement optique, et faire diffracter la lumière laser venant du support d'enregistrement optique sur une partie de détection du dispositif de photodétection en utilisant un dispositif optique du type diffraction ;
**caractérisé par** les opérations suivantes :
faire réfléchir et diffracter la lumière laser d'une longueur d'onde intermédiaire entre les longueurs d'ondes de la lumière laser venant des diodes laser sur une position centrale d'une partie de contrôle intégrée à ladite partie de détection du dispositif de photodétection en utilisant un élément de diffraction du type réfléchissant dans le dispositif optique de type diffraction ; et
détecter la lumière laser venant de l'élément de diffraction du type réfléchissant afin de contrôler la lumière laser venant de chacun d'eux.

15. Procédé de lecture optique permettant de lire/reproduire des données sur un support d'enregistrement optique, comprenant les opérations suivantes :
émettre une lumière laser ayant des longueurs d'ondes différentes en utilisant respectivement une pluralité de diodes laser ;
détecter la lumière laser en utilisant un dispositif de photodétection ;
transmettre la lumière laser de la pluralité de diodes laser au support d'enregistrement optique, et faire diffracter la lumière laser venant du support d'enregistrement optique sur une partie de détection du dispositif de photodétection en utilisant un dispositif optique du type diffraction ;
**caractérisé par** les opérations suivantes :
faire diffracter avec un rendement qui dépend de la direction de polarisation de la lumière incidente et faire diffracter avec un rendement élevé par rapport à la longueur d'onde correspondante, en utilisant un dispositif optique du type diffraction qui possède des éléments optiques du type à hologramme de polarisation, dont chacun correspond à l'une des longueurs d'ondes de la lumière laser, au titre du dispositif optique de type diffraction ; et
faire réfléchir sur une partie de contrôle intégrée à ladite partie de détection du dispositif de photodétection la lumière arrivant sur ledit dispositif optique de type diffraction en utilisant une pellicule réfléchissante placée sur le dispositif optique du type diffraction.
